# EUROPÄISCHE PATENTANMELDUNG

(11) **EP 1 983 221 A2**
(43) Veröffentlichungstag der Anmeldung: **22.10.2008**
(21) Anmeldenummer: 08005270.7
(22) Anmeldetag: 20.03.2008
(51) Int. Cl.: F16H 45/02

(54) **Hydrodynamische Kopplungsanordnung**

(30) Priorität: 18.04.2007 DE 102007018273
(71) Anmelder: ZF Friedrichshafen AG, 88038 Friedrichshafen (DE)
(72) Erfinder: Sasse, Christoph Dr., 97422 Schweinfurt (DE); Reinhardt, Bernd, 97453 Schonungen/Forst (DE); Sueck, Gregor, 97526 Sennfeld (DE); So, Oliver, 97421 Schweinfurt (DE); Rößner, Monika, 97499 Donnersdorf (DE)

(57) **Zusammenfassung**

Eine hydrodynamische Kopplungsanordnung ist mit einem um eine Drehachse drehbaren Kupplungsgehäuse ausgebildet, innerhalb welchem zumindest ein durch wenigstens ein Pumpen- und ein Turbinenrad gebildeter hydrodynamischer Kreis sowie zumindest eine Überbrückungskupplung vorgesehen ist, die zur Herstellung einer Wirkverbindung zwischen einem Antrieb und einem Abtrieb für eine Einrückbewegung und zur Aufhebung dieser Wirkverbindung für eine Ausrückbewegung beaufschlagbar ist. Der hydrodynamische Kreis sowie zumindest ein Druckraum sind zur Beaufschlagung der Überbrückungskupplung an jeweils wenigstens einen Strömungsweg angeschlossen, durch welchen der hydrodynamische Kreis oder der zumindest eine Druckraum an wenigstens eine Druckmittelversorgung angeschlossen sind. Zumindest ein während des Betriebszustandes zur Herausführung eines Strömungsmittels aus dem Kupplungsgehäuse dienender Strömungsweg ist mit einer Durchflussvolumen-Reduzierung versehen, die zumindest außerhalb dieses Betriebszustandes für eine wenigstens verzögerte Abnahme des Befüllvolumens im Kupplungsgehäuse sorgt.

## Beschreibung

Die Erfindung betrifft eine hydrodynamische Kopplungsanordnung gemäß dem Oberbegriff des Anspruches 1.

Eine derartige hydrodynamische Kopplungsanordnung, aus der DE 103 58 902 A1 bekannt, dient zur Herstellung oder zur Aufhebung einer Wirkverbindung zwischen einem Antrieb, wie der Kurbelwelle einer Brennkraftmaschine, und einem Abtrieb, wie einer Getriebeeingangswelle, und ist mit einem um eine Drehachse rotierbaren Kupplungsgehäuse versehen. In der DE 103 58 902 A1 ist die Kopplungsanordnung als hydrodynamischer Drehmomentwandler ausgebildet, in welchem ein hydrodynamischer Kreis mit einem Pumpenrad, einem Turbinenrad und einem Leitrad vorgesehen ist. Darüber hinaus ist die hydrodynamische Kopplungsanordnung mit einer Überbrückungskupplung versehen, durch welche der hydrodynamische Kreis bei Momentenübertragungen vom Antrieb zum Abtrieb umgangen werden kann, wobei der Überbrückungskupplung ein Torsionsschwingungsdämpfer mit zwei Umfangsfedersätzen zur Dämpfung von Torsionsschwingungen zugeordnet ist.

Der in der DE 103 58 902 A1 gezeigte hydrodynamische Drehmomentwandler veranschaulicht eine bei hydrodynamischen Kopplungsanordnungen in jüngster Zeit häufig angewandte Entwicklungstendenz, wonach ein von Pumpen-, Turbinen-, und Leitrad umschlossener Torusraum zugunsten eines kompakten Bauraums der Kopplungsanordnung über begrenzte Abmessungen verfügt. Gleichzeitig erfordern eine große Dimensionierung der Überbrückungskupplung zur Übertragung hoher Drehmomente sowie ein leistungsfähiger und daher komplexer Torsionsschwingungsdämpfer erheblichen Bauraum in der Kopplungsanordnung.

Während längerer Stillstandszeiten eines die hydrodynamische Kopplungsanordnung aufnehmenden Kraftfahrzeugs verlässt ein nicht unerheblicher Teil des im Kupplungsgehäuse enthaltenen Fluids das Kupplungsgehäuse, um in das zugeordnete Getriebe abzufließen. Wird daraufhin ein Neustart eingeleitet, verteilt sich das im Kupplungsgehäuse verbliebende Fluid zunächst fliehkraftbedingt innerhalb des Kupplungsgehäuses, so dass lediglich ein Teil dieses Fluides in den Torusraum gelangt, und dort zur Momentenübertragung verfügbar ist. Dieses Problem wird durch Einlegen der Stufe Drive (D) im Getriebe weiter verstärkt, da hierdurch der Antrieb zunächst mit vorbestimmter Drehzahl wirksam ist, der Abtrieb und somit der Torsionsschwingungsdämpfer dagegen zumindest im wesentlichen noch im Stillstand verharren, was trotz anliegender Fliehkraft zu einem Absaugen von Fluid durch den Torsionsschwingungsdämpfer nach radial innen führt, was durch aus dem Torusraum nachgesaugtes Fluid ausgeglichen werden soll. Zwar wird während dieses Betriebszustandes bei Ausführung der hydrodynamischen Kopplungsanordnung als Zwei-Leitungs-System aus einer Fluidbevorratung frisches Fluid über die geöffnete Überbrückungskupplung in das Kupplungsgehäuse eingeleitet, jedoch gelangt auch dieses Fluid zunächst nicht in den Torusraum, sondern wird vielmehr ebenfalls nach radial innen abgesaugt. Diese Bedingungen äußern sich beim Anfahren des Fahrzeuges in einer Weise, dass der zumindest weitgehend entleerte Torusraum ebenso wie die geöffnete Überbrückungskupplung kaum zur Übertragung des vom Antrieb eingeleiteten Drehmomentes auf den Abtrieb befähigt ist. Einzig an der Überbrückungskupplung anliegende Schleppmomente vermögen eine Übertragung eines Restdrehmomentes sicher zu stellen. Erst mit langsam zunehmender, weiterer Befüllung des Kupplungsraums beginnt ein Übertritt frischen Fluids in den Toruskreis und damit eine Befüllung desselben. Eine derartige Leistungscharakteristik ist bei einem modernen Kraftfahrzeug nicht tolerierbar.

Der Erfindung liegt die Aufgabe zugrunde, eine hydrodynamische Kopplungsanordnung derart auszubilden, dass bei einem Neustart eines Kraftfahrzeuges auch nach Ablauf einer Mindeststillstandszeit ein zufriedenstellend hoher Befüllstand im Kupplungsraum und damit eine hinreichende Drehmomentenübertragbarkeit sicher gestellt ist.

Diese Aufgabe wird durch die im Anspruch 1 angegebenen Merkmale gelöst. Durch Ausbildung zumindest eines während des Betriebszustandes der Kopplungsanordnung zur Herausführung eines Strömungsmittels aus dem Kupplungsgehäuse dienenden Strömungsweges mit einer Durchflussvolumen-Reduzierung, die zumindest außerhalb dieses Betriebszustandes für eine wenigstens verzögerte Abnahme des Befüllvolumens im Kupplungsgehäuse sorgt, wird erreicht, dass beim Abschalten eines die hydrodynamische Kopplungsanordnung aufweisenden Kraftfahrzeugs und damit bei Beginn einer Stillstandszeit für dieses Kraftfahrzeug lediglich ein vernachlässigbar kleiner Anteil des im Kupplungsgehäuse enthaltenen Fluides, das nachfolgend als Strömungsmittel bezeichnet ist, aus dem Kupplungsgehäuse austreten und somit in ein zugeordnetes Getriebe einsickern kann. Auf diese Weise steht auch nach längeren Stillstandszeiten des Kraftfahrzeuges zumindest der wesentliche Teil des beim Abschalten des Kraftfahrzeuges im Kupplungsgehäuse enthaltenen Strömungsmittels für den Aufbau einer Drehmomentübertragung bei Beginn des Betriebszustandes zur Verfügung, so dass jederzeit eine bestimmungsgemäße Nutzung der hydrodynamischen Kopplungsanordnung sichergestellt ist.

Für die Durchflussvolumen-Reduzierung stehen unterschiedliche Lösungen zur Verfügung. Mit besonderem Vorteil ist die Durchflussvolumen-Reduzierung mit einer Strömungs-Freigabeeinrichtung versehen, die beispielsweise zwischen einem Raum im Kupplungsgehäuse, wie dem hydrodynamischen Kreis, und einer Abführung des Strömungsweges, angeordnet ist. Üblicherweise liegt bei Betriebszustand an der dem hydrodynamischen Kreis zugewandten Seite der Strömungs-Freigabeeinrichtung ein höherer Druck an als an der der Abführung des Strömungsweges zugewandten Seite der Strömungs-Freigabeeinrichtung. Die letztgenannte bildet somit eine Trennstelle innerhalb des Strömungsweges, durch welche in geschlossenem Zustand ein Druckverhältnis zwischen hydrodynamischem Kreis und Abführung der Strömungs-Freigabeeinrichtung und damit zwischen zwei Druckbereichen aufrechterhalten wird.

Bei Überschreitung dieses Druckverhältnisses zwischen den beiden Druckbereichen soll durch die Strömungs-Freigabeeinrichtung eine Strömungsverbindung freigegeben werden, während bis zum Erreichen dieses Druckverhältnisses die Strömungsverbindung verschlossen bleiben soll. Da dieses Druckverhältnis im Betriebszustand der hydrodynamischen Kopplungsanordnung deutlich überschritten wird, indem ohne weiteres an einem der Druckbereiche, beispielsweise an der Seite des hydrodynamischen Kreises, ein Druck von etwa 100 000 Pascal anliegt, der sowohl aus den hydrodynamischen Vorgängen im hydrodynamischen Kreis als auch aus der Versorgung durch eine Getriebeölpumpe resultiert, kann im gleichen Druckbereich außerhalb des Betriebszustandes ein Druck verbleiben, der allein aufgrund des statischen Druckes, ausgeübt durch den im Kupplungsgehäuse verbliebenen Anteil des Strömungsmittels, entsteht, und lediglich einen Bruchteil des Druckes im Betriebszustand beträgt, beispielsweise etwa 1 000 Pascal. Dadurch ist die Strömungs-Freigabeeinrichtung befähigt, im Betriebszustand der hydrodynamischen Kopplungsvorrichtung die Strömungsverbindung und damit den Strömungsweg freizugeben, und damit einen ungehinderten Austausch des im Kupplungsgehäuse bereits vorhandenen Strömungsmittels gegen frisches Strömungsmittel vorzunehmen, oder aber außerhalb des Betriebszustandes den Strömungsweg zumindest im wesentlichen zu versperren, und dadurch das im Kupplungsgehäuse verbliebene Strömungsmittel zumindest mit einem wesentlichen Anteil hiervon innerhalb des Kupplungsgehäuses zu halten.

Eine besonders vorteilhafte Ausgestaltung der Strömungs-Freigabeeinrichtung sieht vor, diese als Abdichtung auszubilden, die aufgrund ihrer Verformungssteifigkeit zumindest an einem Durchfluss-Freigabeabschnitt bis zum Erreichen des vorbestimmten Druckverhältnisses eine Strömungsverbindung unter den beiden Druckbereichen zumindest im wesentlichen verhindert, bei Überschreitung dieses Druckverhältnisses dagegen durch Ausweichen des Durchfluss-Freigabeabschnittes einen Druckausgleich unter Freigabe des Strömungsweges zulässt.

Eine besonders vorteilhafte Ausbildung der Strömungs-Freigabeeinrichtung liegt vor, wenn diese nicht nur in Abhängigkeit vom jeweiligen Druckverhältnis wirksam ist, sondern auch in Abhängigkeit von der Fliehkraft. So kann die im Betriebszustand anliegende Fliehkraft das Ausweichen des Durchfluss-Freigabeabschnittes und damit den Druckausgleich unter Freigabe des Strömungsweges unterstützen, während außerhalb des Betriebszustandes aufgrund fehlender Fliehkraft kein Hemmnis für die Strömungs-Freigabeeinrichtung besteht, um bis zum Erreichen des vorbestimmten Druckverhältnisses eine Strömungsverbindung unter den beiden Druckbereichen zumindest im wesentlichen zu verhindern.

Alternativ kann die Durchflussvolumen-Reduzierung allerdings auch mit einem Strömungsdurchlass versehen sein, dessen Durchflußvolumen mittels Strömungspassagen einer vorbestimmt geringen Anzahl oder eines vorbestimmt geringen Querschnittes gebildet ist. Auf diese Weise kann zwar Strömungsmittel über die Strömungspassagen in das der hydrodynamischen Kopplungsvorrichtung zugeordnete Getriebe absickern, jedoch ist der Volumenstrom dieses absickernden Strömungsmittels erheblich geringer als für denjenigen Fall, dass die übliche hohe Anzahl von Strömungspassagen Verwendung findet, oder aber diese Strömungspassagen mit dem üblichen Querschnitt bemessen sind.

Als besonders vorteilhafter Ort für eine Positionierung der erfindungsgemäßen Durchflussvolumen-Reduzierung bietet sich der radial innere Bereich des Kupplungsgehäuses an, und zwar im Übergangsbereich zwischen dem hydrodynamischen Kreis und jeweils einem Strömungsweg. Insbesondere wird hierbei eine Stelle benachbart zu einem ein Leitrad zwischen Pumpen- und Turbinenrad aufnehmenden Freilauf ausgewählt, mit besonderem Vorzug angrenzend an eine Lagerung zwischen dem Freilauf des Leitrades und einem axial benachbarten Bauteil, wie einer das Turbinenrad und/oder einen Torsionsschwingungsdämpfer aufnehmende Nabe, wobei die letztgenannte aufgrund ihrer Funktionalität kurz als Trägernabe bezeichnet werden soll. Zur Vermeidung eines ungewollten Absickerns von Strömungsmittel über die vorgenannte Lagerung kann dieser eine den Durchgang von Strömungsmittel zumindest im wesentlichen verhindernde Dichtvorrichtung zugeordnet sein. Mit besonderem Vorzug sind toleranzabhängige Spalte zwischen der Lagerung und dem jeweils benachbarten Bauteil, wie beispielsweise einer Druckscheibe, fertigungsbedingt auf ein Minimum, mit besonderem Vorzug nahezu auf Null, reduziert. In diesem Fall wirken auch die Spalte als Durchflussvolumen-Reduzierung.

Im Folgenden wird ein Ausführungsbeispiel für die Erfindung angegeben. Es zeigt im Einzelnen:
- Fig. 1: die obere Hälfte eines Längsschnittes durch ein Kupplungsgehäuse einer hydrodynamischen Kopplungsvorrichtung mit einer Mehrzahl von Strömungswegen für fluidförmiges Medium,
- Fig. 2: eine vergrößerte Herauszeichnung des in Fig. 1 mit X bezeichneten eingekreisten Bereiches zur Darstellung eines Strömungsweges mit einer Abdichtung in unmittelbarer Nachbarschaft zu einer in den Strömungsweg integrierten Druckscheibe, mit Darstellung der Abdichtung bei geringer Druckbelastung,
- Fig. 3: wie Fig. 2, aber mit Darstellung der Abdichtung bei höherer Druckbelastung,
- Fig. 4: eine Draufsicht auf die in Fig. 2 gezeigte Druckscheibe aus Blickrichtung A mit Ausbildung eines Strömungsdurchlasses gemäß dem Stand der Technik, wobei dieser Strömungsdurchlass über eine Mehrzahl von Strömungspassagen in vorbestimmter Anzahl und vorbestimmter Querschnittsfläche verfügt,
- Fig. 5: wie Fig. 4, aber mit erfindungsgemäßer Reduzierung der Querschnittsfläche der Strömungspassagen bei dem Strömungsdurchlass,
- Fig. 6: wie Fig. 4, aber mit erfindungsgemäßer Reduzierung der Anzahl der Strömungspassagen bei dem Strömungsdurchlass,
- Fig. 7: wie Fig. 2, aber mit einer der Lagerung zugeordneten Dichtvorrichtung sowie einem minimierten Axialspalt zwischen der Lagerung und einem Bauteil der Kopplungsanordnung.

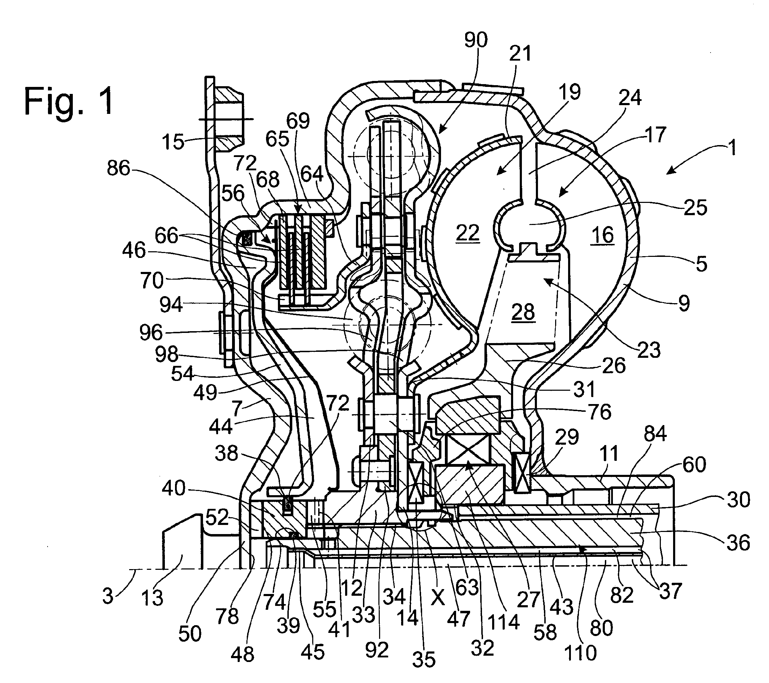

In Fig. 1 ist eine hydrodynamische Kopplungsvorrichtung 1 dargestellt, ausgebildet als hydrodynamischer Drehmomentwandler. Die hydrodynamische Kopplungsvorrichtung 1 weist ein Kupplungsgehäuse 5 auf, das um eine Drehachse 3 Rotationsbewegungen auszuführen vermag. Das Kupplungsgehäuse 5 verfügt an seiner einem nicht gezeigten Antrieb, wie beispielsweise einer Kurbelwelle einer Brennkraftmaschine, zugewandten Seite über eine antriebsseitige Gehäusewandung 7, die mit einer Pumpenradschale 9 fest verbunden ist. Diese geht im radial inneren Bereich in eine Pumpenradnabe 11 über.

Zurückkommend auf die antriebsseitige Gehäusewandung 7, weist diese an ihrer dem nicht gezeigten Antrieb zugewandten Seite einen Lagerzapfen 13 auf, der in bekannter und daher nicht näher dargestellter Weise an einem Element des Antriebs, wie beispielsweise der Kurbelwelle, zur antriebsseitigen Aufnahme des Kupplungsgehäuses 5 vorgesehen ist. Weiterhin verfügt die antriebsseitige Gehäusewandung 7 über eine Befestigungsaufnahme 15, die üblicherweise zur Befestigung des Kupplungsgehäuses 5 am Antrieb dient, und zwar vorzugsweise über eine nicht gezeigte Flexplatte. Bezüglich einer zeichnerischen Darstellung der Aufnahme des Lagerzapfens eines hydrodynamischen Kopplungselementes in einer Kurbelwelle eines Antriebs sowie einer Anbindung des hydrodynamischen Kopplungselementes über eine Flexplatte an die Kurbelwelle wird beispielhaft auf die DE 32 22 119 C1, Fig. 1 verwiesen.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Pumpenrad 17, Turbinenrad 19 und Leitrad 23 bilden in bekannter Weise einen hydrodynamischen Kreis 24, der einen Innentorus 25 umschließt.

Erwähnt werden sollte weiterhin, dass Leitradschaufeln 28 des Leitrades 23 auf einer Leitradnabe 26 vorgesehen sind, die auf einem Freilauf 27 angeordnet ist. Der Letztgenannte stützt sich über eine Axiallagerung 29 an der Pumpenradnabe 11 axial ab und steht über eine Verzahnung 32 in drehfester, aber axial relativ verschiebbarer Verbindung mit einer Stützwelle 30, die radial innerhalb der Pumpenradnabe 11 angeordnet ist. Die als Hohlwelle ausgebildete Stützwelle 30 ihrerseits umschließt eine als Abtrieb 110 der hydrodynamischen Kopplungsvorrichtung 1 dienende Getriebeeingangswelle 36, die mit einer Mittenbohrung 37 versehen ist. Diese Mittenbohrung 37 nimmt eine Hülse 43 auf, und zwar derart, dass die Hülse 43 mittels Abstützbereichen 45 radial in der Mittenbohrung 37 zentriert ist. Mit Axialversatz zu diesen Abstützbereichen 45 bildet die Hülse 43 radial zwischen sich und der umschließenden Wand der Mittenbohrung 37 einen ersten Versorgungskanal 58 für fluidförmiges Medium, nachfolgend als Strömungsmittel bezeichnet, aus, der bei der vorliegenden Auslegung der hydrodynamischen Kopplungsanordnung 1 als Zuführung für das Strömungsmittel wirksam ist. Radial innerhalb der Hülse 43 verbleibt ein zentraler Versorgungskanal 47.

Die Getriebeeingangswelle 36 nimmt über eine Verzahnung 34 eine Nabe 33 drehfest, aber axial verschiebbar auf, wobei diese Nabe 33 in einem radial äußeren Bereich zur Befestigung einer abtriebsseitigen Nabenscheibe 92 eines Torsionsschwingungsdämpfers 90 dient. Diese Nabenscheibe 92 wirkt über einen Umfangsfedersatz 94 mit zwei Deckblechen 96, 98 als im Kupplungsgehäuse 5 enthaltenen Bauteilen 12, 14 zusammen, wobei die Deckbleche 96, 98 ebenfalls Teile des Torsionsschwingungsdämpfers 90 sind. Das Deckblech 98 als Bauteil 14 dient zur Aufnahme eines Turbinenradfußes 31 mittels einer Nietverbindung 63, während das andere Deckblech 96 zur Befestigung eines Innenlamellenträgers 64 einer Kupplungsvorrichtung 65, die als Lamellenkupplung ausgebildet ist, vorgesehen ist. Die Kupplungsvorrichtung 65 verfügt sowohl über innere Kupplungselemente 66, die über eine am Innenlamellenträger 64 vorgesehene Verzahnung 70 drehfest mit demselben sind, als auch über äußere Kupplungselemente 68, die mit den inneren Kupplungselementen 68 in Wirkverbindung bringbar sind, wobei die äußeren Kupplungselemente 68 über eine als Außenlamellenträger 69 wirksame Verzahnung 72 mit der antriebsseitigen Wandung 7 und damit mit dem Kupplungsgehäuse 5 in Drehverbindung stehen. Die Kupplungsvorrichtung 65 ist mittels eines axial verlagerbaren Kolbens 54 ein- oder ausrückbar, und bildet gemeinsam mit dem Kolben 54 eine Überbrückungskupplung 56 der hydrodynamischen Kopplungsvorrichtung 1. Wie Fig. 1 zeigt, kann zwischen dem Kolben 54 und dem Torsionsschwingungsdämpfer 90 eine Trennplatte 49 vorgesehen sein, die den hydrodynamsichen Kreis 24 von einem axial durch den Kolben 54 und die Trennplatte 49 begrenzten Versorgungsraum 44 isoliert. An der von diesem Versorgungsraum 44 abgewandten Seite des Kolbens 54 ist, axial durch denselben sowie durch die antriebsseitige Gehäusewandung 7 begrenzt, ein Druckraum 46 vorgesehen. Der Kolben 54 ist im Kupplungsgehäuse 5 zentriert, und gegenüber demselben mittels einer Abdichtung 86 dichtend aufgenommen.

Die Nabe 33, die wegen der Aufnahme des Torsionsschwingungsdämpfers 90, sowie über denselben, mittelbar auch des Turbinenrades 19, nachfolgend als Trägernabe 33 bezeichnet ist, stützt sich einerseits über das Deckblech 98 und eine Lagerung 35, die als Axiallagerung ausgebildet ist, über eine Druckscheibe 76 am Freilauf 27 ab, und kann sich andererseits mit seinem der antriebsseitigen Wandung 7 zugewandten, einen Axiallagerungsbereich 48 bildenden Ende an einer Axialanlagefläche 50 der antriebsseitigen Gehäusewandung 7 axial abstützen, wobei sich diese Axialanlagefläche 50, ausgehend von der Drehachse 3 des Kupplungsgehäuses 5, nach radial außen erstreckt. Innerhalb des Erstreckungsbereiches dieser Axialanlagefläche 50 ist, ausgehend von der Gegenseite der antriebsseitigen Gehäusewandung 7 des Kupplungsgehäuses 5, der Lagerzapfen 13 befestigt.

Nach radial innen hin ist die Trägernabe 33 über eine in einer Dichtungsausnehmung 74 aufgenommenen Abdichtung 39 gegenüber der Getriebeeingangswelle 36 abgedichtet, nach radial außen durch eine in einer Dichtungsausnehmung 72 aufgenommenen Abdichtung 38 gegenüber dem Kolben 54 der Überbrückungskupplung 56. Durch diese beiden Abdichtungen 38, 39 werden Strömungsdurchlässe 52, welche die Trägernabe 33 an ihrem Axiallagerungsbereich 48 durchdringen und mit Vorzug als Nutungen 85 im Axiallagerungsbereich 48 ausgebildet sind, von anderen Strömungsdurchlässen 55, welche im axialen Erstreckungsbereich der Trägernabe 33 zwischen dem Kolben 54 und dem Torsionsschwingungsdämpfer 90 ausgebildet sind, getrennt. Die einen Strömungsdurchlässe 52 stehen mit dem zentralen Versorgungskanal 47 der Hülse 47, der als zentraler Strömungsweg 80 wirksam ist, in Strömungsverbindung, die anderen Strömungsdurchlässe 55 dagegen mit dem ersten Versorgungskanal 58 radial zwischen der Hülse 43 und der dieselbe umschließenden Wand der Mittenbohrung 37 der Getriebeeingangswelle 36, wobei dieser Versorgungskanal 58 als erster Strömungsweg 82 wirksam ist. Darüber hinaus ist ein zweiter Versorgungskanal 60 radial zwischen der Getriebeeingangswelle 36 und der Stützwelle 30 vorgesehen, der bei der vorliegenden Auslegung der hydrodynamischen Kopplungsanordnung 1 als Abführung für das Strömungsmittel wirksam ist, und als zweiter Strömungsweg 84 dient.

Der zentrale Strömungsweg 80 dient, über die Strömungsdurchlässe 52, zur Herstellung eines Überdruckes im Druckraum 46 gegenüber dem Versorgungsraum 44 und damit zur Druckbeaufschlagung des Kolbens 54 der Überbrückungskupplung 56 zum Einrücken in Richtung zur Kupplungsvorrichtung 65, wodurch eine Reibverbindung zwischen den einzelnen Kupplungselementen 66, 68 hergestellt wird. Zur Erzeugung dieses Überdruckes im Druckraum 46 gegenüber dem Versorgungsraum 44 ist eine Verbindung des zentralen Strömungsweges 80 mit einer Steuervorrichtung und einem Hydraulikflüssigkeitsvorrat erforderlich. Weder die Steuervorrichtung noch der Hydraulikflüssigkeitsvorrat sind zeichnerisch dargestellt, können aber der Fig. 1 der DE 44 23 640 A1 entnommen werden, und sind daher als inhaltlich in die jetzt vorliegende Patentanmeldung aufgenommen zu betrachten.

Der erste Strömungsweg 82 dient, über die Verzahnung 34 und die Strömungsdurchlässe 55, zur Herstellung eines Überdruckes in dem Versorgungsraum 44 gegenüber dem Druckraum 46, und damit zur Druckbeaufschlagung des Kolbens 54 der Überbrückungskupplung 56 zum Ausrücken in von der Kupplungsvorrichtung 65 fortweisender Richtung, wodurch die Reibverbindung zwischen den einzelnen Kupplungselementen 66, 68 der Kupplungsvorrichtung 65 gelöst wird. Zur Herstellung dieses Überdruckes im Versorgungsraum 44 gegenüber dem Druckraum 46 ist eine Verbindung des ersten Strömungsweges 82 mit der bereits erwähnten Steuervorrichtung und dem ebenfalls genannten Hydraulikflüssigkeitsvorrat erforderlich.

Fluidförmiges Medium, das über den ersten Strömungsweg 82 sowie die Strömungsdurchlässe 55 in den Versorgungsraum 44 gelangt ist, tritt, nach Kühlung der Kupplungselemente 66, 68 der Kupplungsvorrichtung 75, in den hydrodynamischen Kreis 24, um von dort aus über den zweiten Strömungsweg 84 wieder auszutreten.

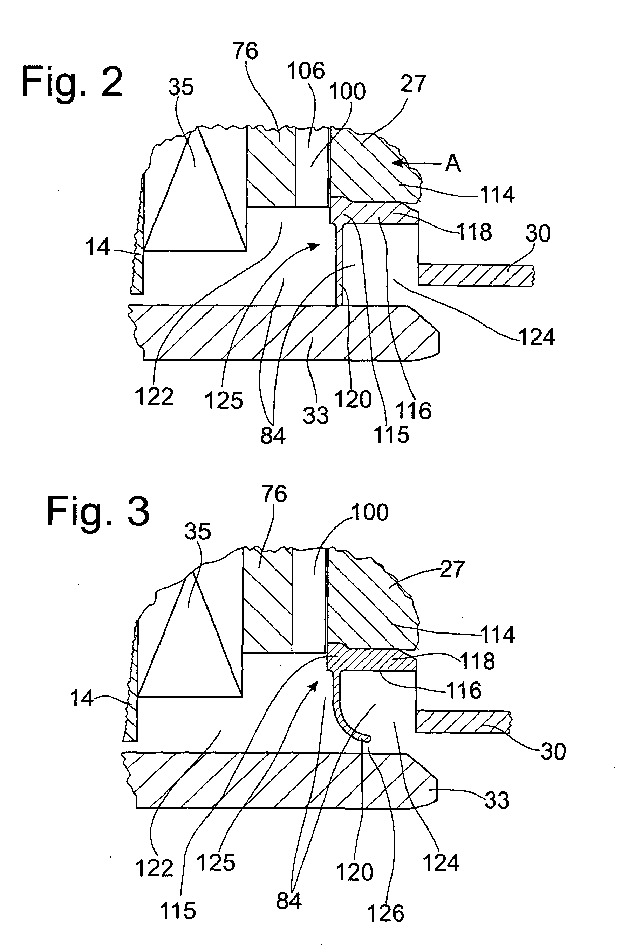

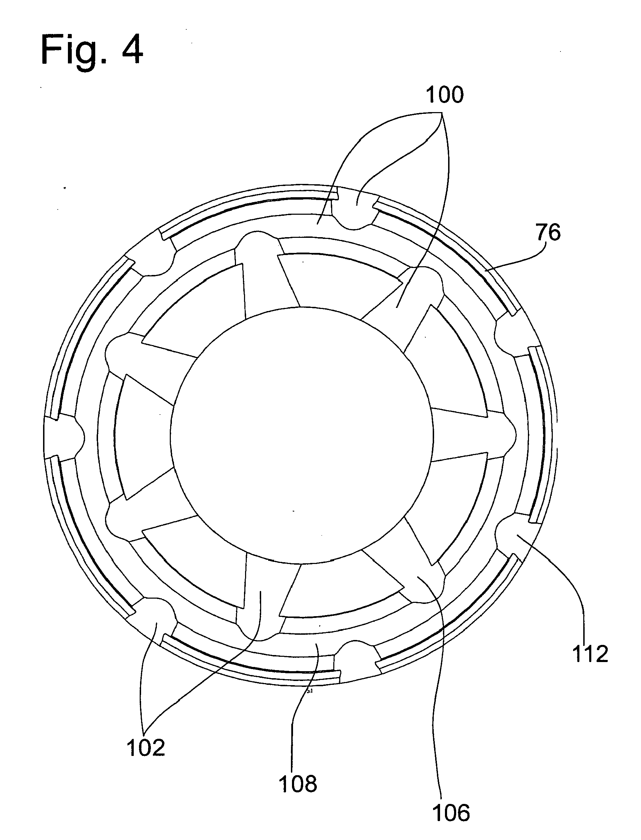

Der in Fig. 1 mit X umkreiste Bereich ist in Fig. 2 vergrößert herausgezeichnet. Die in Fig. 2 klar erkennbare Druckscheibe 76 ist, aus Blickrichtung A gesehen, aus in Fig. 4 in einer Weise dargestellt, wie sie aus dem Stand der Technik bekannt ist. Gemäß Fig. 4 weist die Druckscheibe 76, über den Umfang verteilt, eine Mehrzahl radial innerer Radialnutungen 106 auf, die über eine im wesentlichen ringförmige Verbindungsnutung 108 mit einer Mehrzahl radial äußerer Radialnutungen 112 verbunden sind. Die Radialnutungen 106 und 112 bilden zusammen mit der Verbindungsnutung 108 Strömungspassagen 102 eines Strömungsdurchlasses 100. Der in Fig. 2 gezeigte Schnitt zeigt die Druckscheibe 76 mit einer inneren Radialnutung 106 als Strömungsdurchlass 100.

Gemäß Fig. 2 ist, radial innerhalb eines Innenringes 114 des Freilaufes 27 und axial angrenzend zur Stützwelle 30, eine Abdichtung 116 vorgesehen, die über einen am Innenring 114 angreifenden Festlegungsschenkel 118 und einen an diesem vorgesehenen Durchfluß-Freigabeschenkel 120 verfügt. Dieser Durchfluß-Freigabeschenkel 120 ist, sofern in Druckbereichen 122, 124 beidseits des Durchfluß-Freigabeschenkels beispielsweise außerhalb des Betriebszustandes der hydrodynamischen Kopplungsanordnung 1 keine oder nur geringe Druckunterschiede anliegen, aufgrund einer definierten Eigensteifigkeit verformungsstabil, so dass die Abdichtung 116 aufgrund dieses Verhaltens des Durchfluß-Freigabeschenkels 120 die Funktion einer Durchflußvolumen-Reduzierung 125 entfalten kann. Der Durchfluß-Freigabeschenkel 120 entfaltet nämlich bei geringem Druckverhältnis zwischen den beiden Druckbereichen die Wirkung einer zumindest im wesentlichen dichten Trennwandung zwischen dem dem hydrodynamischen Kreis 24 zugeordneten ersten Druckbereich 122 und dem dem zweiten Versorgungskanal 60 zugeordneten zweiten Druckbereich 124, wobei beide Druckbereiche 122 und 124 Teile des zweiten Strömungsweges 84 sind. Auf jeden Fall ist der Durchfluß-Freigabeschenkel 120 ausreichend formstabil, um außerhalb des Betriebszustandes der hydrodynamischen Kopplungsanordnung 1 dem im ersten Druckbereich 122 anliegenden hydrostatischen Druck, erzeugt durch das im hydrodynamischen Kreis 24 verbliebene Strömungsmittel, standzuhalten. Im zweiten Druckbereich 124 liegt bei diesem Betriebszustand kein Überdruck an. Die Abdichtung 116 reduziert erheblich die ansonsten außerhalb des Betriebszustandes der hydrodynamischen Kopplungsanordnung 1 vorhandene Sickerströmung an Strömungsmittel aus dem hydrodynamischen Kreis 24 heraus, und sorgt somit dafür, dass auch nach längeren Stillstandsphasen eines die hydrodynamische Kopplungsanordnung 1 aufnehmenden Kraftfahrzeuges bei einem nachfolgenden Neustartvorgang hinreichend Strömungsmittel im hydrodynamischen Kreis 24 enthalten ist, um unverzüglich Drehmoment übertragen zu können. Üblicherweise genügen für einen problemlosen Anfahrvorgang des Kraftfahrzeuges etwa 2/3 des bei länger andauerndem Betriebszustand im hydrodynamischen Kreis 24 enthaltenen Strömungsmittels. Da außerhalb des Betriebszustandes keine Fliehkraft anliegt, liegt diesbezüglich keine Beeinflussung der Wirkung der Abdichtung 116 an.

Im Betriebszustandes der hydrodynamischen Kopplungsanordnung 1 liegt im hydrodynamischen Kreis 24 und damit im ersten Druckbereich 122 ein ungleich höherer Druck als außerhalb des Betriebszustandes an, während im zweiten Druckbereich immer noch kein Überdruck vorhanden ist. Aufgrund des hohen Druckverhältnisses zwischen erstem Druckbereich 122 und zweitem Druckbereich 124 wird, wie Fig. 3 zeigt, der Durchfluß-Freigabeschenkel 120 der Abdichtung 116 trotz dessen Formsteifigkeit ausgelenkt, so dass er eine Strömungsverbindung 126 zwischen den beiden Druckbereichen 122 und 124 des zweiten Strömungsweges 84 freigibt, wobei die Abdichtung 116 als Strömungsfreigabeeinrichtung 115 der Durchflußvolumen-Reduzierung 125 wirksam ist. Diese Funktion der Durchflußvolumen-Reduzierung 125 ist notwendig, um bei Einleitung frischen Strömungsmittels in den hydrodynamischen Kreis 24 über den ersten Strömungsweg 82 inklusive der Strömungspassagen 55 gleichzeitig erhitztes Strömungsmittel aus dem hydrodynamischen Kreis 24 abführen zu können, und wird, bei Anordnung des Durchfluß-Freigabeschenkels 120 wie in Fig. 2 oder 3 gezeigt, durch die im Betriebszustand wirksame Fliehkraft unterstützt.

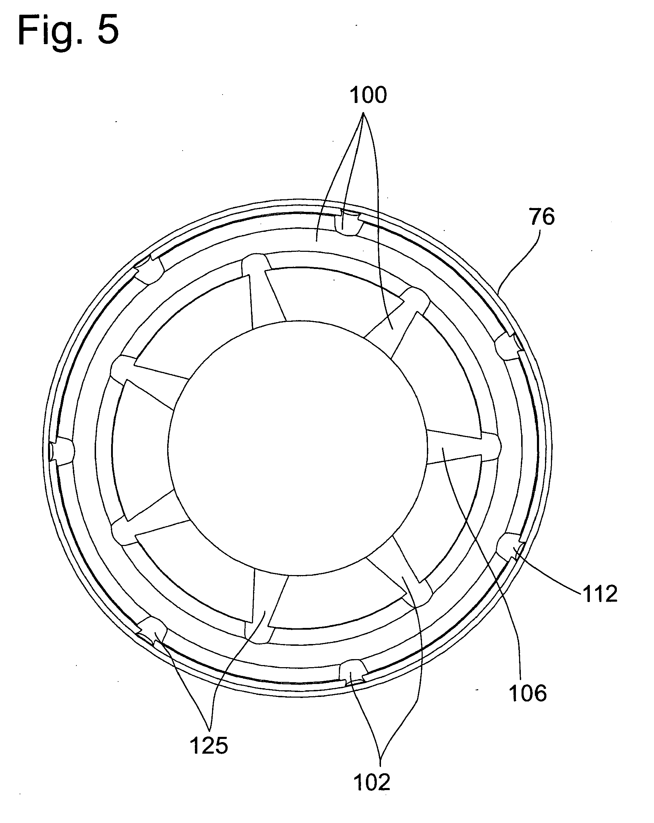

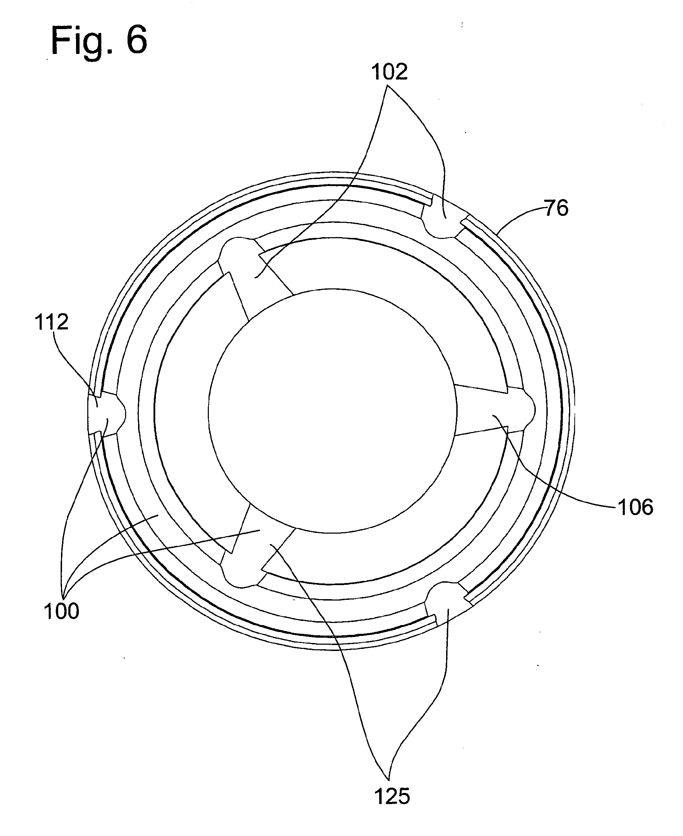

Eine andere Ausfertigung einer Durchflußvolumen-Reduzierung 125 ist in den Fig. 5 oder 6 dargestellt. Die Durchflußvolumen-Reduzierung 125 entsteht dadurch, dass, jeweils betrachtet im Vergleich zur Darstellung in Fig. 4, der an der Druckscheibe 76 jeweils ausgebildete Strömungsdurchlass 100 über Strömungspassagen 102 verfügt, die entweder gemäß Fig. 5 über einen geringeren Querschnitt verfügen, oder gemäß Fig. 6 über eine geringere Anzahl an Strömungspassagen 102.

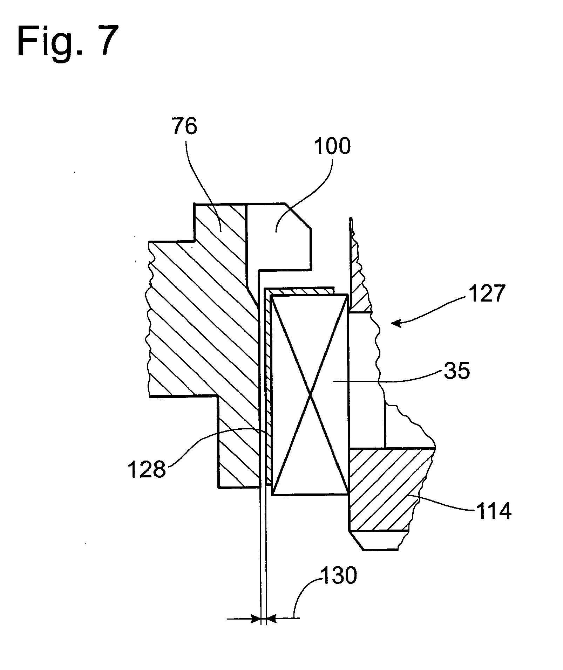

Abweichend von der Darstellung in Fig. 2 ist die Lagerung 35 bei der in Fig. 7 gezeigten Ausfertigung axial zwischen der Druckscheibe 76 und dem Freilauf 27 des Leitrades 23 angeordnet. Der Lagerung 35 ist eine Dichtvorrichtung 128 zugeordnet, um einen Durchtritt von Strömungsmittel durch die Lagerung 35 zu vermeiden. Somit verbleibt dem Strömungsmittel lediglich der Weg durch einen toleranzabhängig entstehenden Spalt 130 axial zwischen dem Druckring 76 und der Dichtvorrichtung 128. Zugunsten einer geringen Absickerung von Strömungsmittel aus dem hydrodynamischen Kreis 24 außerhalb des Betriebszustandes ist dieser Spalt 130 fertigungstechnisch soweit als möglich zu minimieren, und soll sich idealerweise dem Wert Null annähern. Somit ist im Erstreckungsbereich der Lagerung 35 ein unerwünschtes Abströmen von Strömungsmittel nahezu vollständig vermeidbar. Aufgrund der Minimierung des Spaltes 130 entsteht somit eine weitere Ausfertigung einer Durchflußvolumen-Reduzierung 125, und zwar insbesondere dann, wenn dem Spalt 130 eine Dichtvorrichtung 128 für die Lagerung 35 zugeordnet ist.

### Bezugszeichenliste

- 1.: hydrodyn. Kopplungsvorrichtung
- 3.: Drehachse
- 5.: Kupplungsgehäuse
- 7.: antriebsseitige Gehäusewandung
- 9.: Pumpenradschale
- 11.: Pumpenradnabe
- 12.: Bauteil eines TD
- 13.: Lagerzapfen
- 14.: Bauteil eines TD
- 15.: Befestigungsaufnahme
- 16.: Pumpenradschaufeln
- 17.: Pumpenrad
- 19.: Turbinenrad
- 21.: Turbinenradschale
- 22.: Turbinenradschaufeln
- 23.: Leitrad
- 24.: hydrodynamischer Kreis
- 25.: Innentorus
- 26.: Leitradnabe
- 27.: Freilauf
- 28.: Leitradschaufeln
- 29.: Axiallagerung
- 30.: Stützwelle
- 31.: Turbinenradfuss
- 32.: Verzahnung
- 33.: Nabe
- 34.: Verzahnung
- 35.: Axiallagerung
- 36.: Getriebeeingangswelle
- 37.: Mittenbohrung
- 38.: Abdichtung
- 39.: Abdichtung
- 43.: Hülse
- 44.: Versorgungsraum
- 45.: Abstützbereiche
- 46.: Druckraum
- 47.: zentraler Versorgungskanal
- 48.: Axiallagerungsbereich der Nabe
- 49.: Trennplatte
- 50.: Axialanlagefläche
- 52.: Strömungsdurchlässe
- 54.: Kolben
- 55.: Strömungsdurchlässe
- 56.: Überbrückungskupplung
- 58.: erster Versorgungskanal
- 60.: zweiter Versorgungskanal
- 63.: Nietverbindung
- 64.: Innenlamellenträger
- 65.: Kupplungsvorrichtung
- 66.: innere Kupplungselemente
- 68.: äußere Kupplungselemente
- 69.: Außenlamellenträger
- 70.: Verzahnung
- 72.: Dichtungsausnehmung
- 74.: Dichtungsausnehmung
- 76.: Druckscheibe
- 78.: Axialausnehmung
- 80.: zentraler Strömungsweg
- 82.: erster Strömungsweg
- 84.: zweiter Strömungsweg
- 85.: Nutungen
- 86.: Abdichtung
- 88.: Verzahnung
- 90.: Torsionsschwingungsdämpfer
- 92.: abtriebsseitige Nabenscheibe
- 94.: Umfangsfedersatz
- 96.: Deckblech
- 98.: Deckblech
- 100.: Strömungsdurchlass
- 102.: Strömungspassagen
- 104.: Strömungsverbindung
- 106.: Radialnutungen
- 108.: Verbindungsnutung
- 110.: Abtrieb
- 112.: Radialnutungen
- 114.: Innenring des Freilaufs
- 115.: Strömungs-Freigabeeinrichtung
- 116.: Abdichtung
- 118.: Festlegungsabschnitt
- 120.: Durchfluß-Freigabeabschnitt
- 122.: erster Druckbereich
- 124.: zweiter Druckbereich
- 125.: Durchflußvolumen-Reduzierung
- 126.: Strömungsverbindung
- 128.: Dichtvorrichtung
- 130.: Axialspalt

## Patentansprüche

1. Hydrodynamische Kopplungsanordnung mit einem um eine Drehachse drehbaren Kupplungsgehäuse, innerhalb welchem zumindest ein durch wenigstens ein Pumpen- und ein Turbinenrad gebildeter hydrodynamischer Kreis sowie zumindest eine Überbrückungskupplung vorgesehen ist, die zur Herstellung einer Wirkverbindung zwischen einem Antrieb und einem Abtrieb für eine Einrückbewegung und zur Aufhebung dieser Wirkverbindung für eine Ausrückbewegung beaufschlagbar ist, wobei der hydrodynamische Kreis sowie zumindest ein Druckraum zur Beaufschlagung der Überbrückungskupplung an jeweils wenigstens einen Strömungsweg angeschlossen sind, durch welchen der hydrodynamische Kreis oder der zumindest eine Druckraum an wenigstens eine Druckmittelversorgung angeschlossen sind,
**dadurch gekennzeichnet,**
**dass** zumindest ein während des Betriebszustandes zur Herausführung eines Strömungsmittels aus dem Kupplungsgehäuse (5) dienender Strömungsweg (84) mit einer Du rchflussvolumen-Reduzierung (125) versehen ist, die zumindest außerhalb dieses Betriebszustandes für eine wenigstens verzögerte Abnahme des Befüllvolumens im Kupplungsgehäuse (5) sorgt.

2. Hydrodynamische Kopplungsanordnung nach Anspruch 1,
**dadurch gekennzeichnet,**
**dass** die Durchflussvolumen-Reduzierung (125) mit einer Strömungs-Freigabeeinrichtung (115) versehen ist, die bei Überschreitung eines vorbestimmbaren Druckverhältnisses eine Strömungsverbindung (126) im Strömungsweg (84) für einen Durchfluss von Strömungsmittel freigibt, bei Erreichen oder Unterschreitung dieses Druckverhältnisses dagegen den Durchfluss durch Schließung der Strömungsverbindung (126) unterbindet.

3. Hydrodynamische Kopplungsanordnung nach Anspruch 2,
**dadurch gekennzeichnet,**
**dass** die Strömungs-Freigabeeinrichtung (115) über eine zwei Druckbereiche (122, 124) des Strömungsweges (84) voneinander trennende Abdichtung (116) verfügt, die aufgrund einer vorbestimmten Verformungssteifigkeit zumindest eines Durchfluss-Freigabeabschnittes (120) bis zum Erreichen des vorbestimmten Druckverhältnisses die Strömungsverbindung (126) zwischen den beiden Druckbereichen (122, 124) zumindest im wesentlichen verschließt, bei Überschreitung dieses Druckverhältnisses dagegen durch Ausweichen des Duchfluss-Freigabeabschnittes (120) dagegen einen Druckausgleich unter Freigabe der Strömungsverbindung (126) zulässt.

4. Hydrodynamische Kopplungsanordnung nach Anspruch 1,
**dadurch gekennzeichnet,**
**dass** die Durchflussvolumen-Reduzierung (125) mit einem Strömungsdurchlass (100) versehen ist, dessen Durchflußvolumen mittels Strömungspassagen (102) einer vorbestimmt geringen Anzahl oder eines vorbestimmt geringen Querschnittes gebildet ist.

5. Hydrodynamische Kopplungsanordnung nach Anspruch 4,
**dadurch gekennzeichnet,**
**dass** der Strömungsdurchlass (100) zumindest im wesentlichen im radial inneren Bereich des Kupplungsgehäuses (5) im Übergangsbereich zwischen dem hydrodynamischen Kreis (24) und einem zugeordneten Strömungsweg (84) angeordnet ist.

6. Hydrodynamische Kopplungsanordnung nach Anspruch 5 mit einem ein Leitrad zwischen Pumpen- und Turbinenrad aufnehmenden Freilauf,
**dadurch gekennzeichnet,**
**dass** der Strömungsdurchlass (100) zwischen einer Axiallagerung (35) und dem Freilauf (27) des Leitrades (23) vorgesehen ist.

7. Hydrodynamische Kopplungsanordnung nach einem der Ansprüche 1 bis 6 mit zumindest einer innerhalb eines Strömungswegs angeordneten Lagerung zwischen relativ zueinander bewegbaren Bauteilen,
**dadurch gekennzeichnet,**
**dass** der Lagerung (35) eine den Durchgang von Strömungsmittel durch dieselbe zumindest im wesentlichen verhindernde Dichtvorrichtung (128) zugeordnet ist.

8. Hydrodynamische Kopplungsanordnung nach einem der Ansprüche 1 bis 7 mit zumindest einer innerhalb eines Strömungswegs angeordneten Lagerung zwischen relativ zueinander bewegbaren Bauteilen,
**dadurch gekennzeichnet,**
**dass** ein zwischen der Lagerung (35) und einem benachbarten Bauteil (14) im Kupplungsgehäuse (5) toleranzabhängig vorhandener Spalt (130) fertigungsbedingt zumindest im wesentlichen auf den Wert Null reduziert ist.
